## Europäisches Patentamt

## European Patent Office

## Office européen des brevets

(11) Publication number: **0 105 058**
**B1**

# EUROPEAN PATENT SPECIFICATION

(45) Date of publication of patent specification: **23.12.87**

(51) Int. Cl.⁴: **A 63 H 29/22, H 02 K 25/00**

(21) Application number: **82109190.7**

(22) Date of filing: **05.10.82**

(54) A driving apparatus useful in a movable toy.

(43) Date of publication of application:
**11.04.84 Bulletin 84/15**

(45) Publication of the grant of the patent:
**23.12.87 Bulletin 87/52**

(84) Designated Contracting States:
**AT BE CH DE FR GB IT LI NL SE**

(56) References cited:
**DE-A-1 302 033**
**FR-A-2 050 702**
**FR-A-2 094 280**
**GB-A-1 033 825**
**US-A-2 251 505**
**US-A-2 794 929**
**US-A-3 611 091**

(73) Proprietor: **NIKKO Co., Ltd.**
**No. 15-15 Kameari 5-chome Katsushika-ku**
**Tokyo (JP)**

(72) Inventor: **Hattori, Takeshi**
**c/o Nikko Co., Ltd. No. 15-15, Kameari 5-chome**
**Katsushika-ku Tokyo (JP)**

(74) Representative: **Müller, Hans-Jürgen, Dipl.-Ing.**
**et al**
**Müller, Schupfner & Gauger Lucile-Grahn-**
**Strasse 38 Postfach 80 13 69**
**D-8000 München 80 (DE)**

Courier Press, Leamington Spa, England.

## Description

Introduction of specification

This invention relates to a novel driving apparatus for movable toys, such as a toy car or the like, which apparatus utilizes a combination of permanent magnets, an electro-magnet and reed switches as decribed in FR—A—2 050 702 and indicated in the pre-characterising portion of the accompanying claim 1.

Heretofore, a DC motor has usually been utilized as a driving apparatus for movable toy. The DC motor comprises a field, an armature and a commutator as described e.g. in US—A—2 251 505. The field generally consists of, as a most simple structure, a stator comprising a permanent magnet with opposite N and S poles, and arranged with a certain gap in relation to the armature to form a magnetic circuit. The armature consists of a rotor comprising a winding and a core, mounted on a rotary shaft. The commutator is a part of electrical connection with the winding of the armature, and is connected to a DC source through a brush. In the DC motor thus constructed, the direct current is fed to the brush for passing through the commutator to the winding, thereby causing rotation of the armature.

Since such type of the DC motor comprises the armature and the commutator directly connected thereto, rotation of the armature causes friction between the commutator and the brush contacted therewith, and generates a spark there-between. As a result, the brush is too early worn out to aggravate rotary condition of the motor, resulting in a lack of durability for a long term use. Further, in a conventional motor only rotary movement may be produced but a direct straight movement cannot be obtained, which limits its application.

However, it is also known according to DE—A—1 302 033 to install a straight line of magnetic pole-pieces on a fixed track and an electro-magnet on a movable carriage using pulses of magnetic forces for moving the carriage along the track. But using contacts is disadvantageous for some reasons. If, however, a magnet of a toy car according to US—A—2 794 929 switches an electro-magnet to create a magnetic field, a permanent magnet of the mobile body is attracted and moved forward along a moving part. This apparatus functions very unsmoothly and needs a complicated structure.

Finally, it is known according to FR—A—2 050 702 to use reed switches for a driving apparatus as mentioned in the opening part of claim 1 of the present invention. But this and another apparatus according to GB—A—1 033 825 are restricted to rotary systems and are relatively complicated unless the mobile body moves very unsmoothly.

Accordingly a general object of the invention is to provide a novel driving apparatus of this type which is simple in structure and works very smoothly with regard to either rotary or straight movement.

The invention is claimed in claim 1. In accordance with the invention a pair of reed switches is disposed symmetrically on opposite sides of the pole of the electro-magnet which pole faces the permanent magnet when passing said pole of the electro-magnet. Thus, one switch of the pair of reed switches is situated in front of the pole of the electro-magnet and the other switch of the pair of reed switches is situated behind said pole of the electro-magnet in the line of reed switches which line is situated parallel with respect to the moving path. This apparatus is very simple in structure and electrical circuitry and avoids relatively long periods of movement without movement force which would be created by attractive and by repulsive magnetic forces of one and the same pole of the electro-magnet.

According to one embodiment a disk is turnably carried through a bearing adjacent to the electro-magnet, said disk being provided at its circumference with the plurality of the permanent magnets spaced apart in the predetermined distance and opposed to the pole of the electro-magnet.

According to another embodiment of the invention the combination of the electro-magnet and of the pair of reed switches is placed on a bottom of the mobile body, while the plurality of the permanent magnets are arranged oppositely to a core of the electro-magnet along a moving direction of the mobile body a base for its movement in the predetermined distance.

Finally, according to another embodiment of the invention the plurality of the permanent magnets is arranged in the moving direction of the mobile body at its bottom in the predetermined distance, while the combination of a plurality of the electromagnets and of the pairs of reed switches is arranged oppositely to the permanent magnets in the moving direction of the mobile body on the base for its movement in the predetermined distance.

A still further embodiment of the invention is a driving apparatus wherein the circuit for exciting the electro-magnet is connected to the DC-source so as to connect the pair of the contactless switches in parallel to the exciting coil of the electro-magnet and to actuate the pair of reed switches for energizing the exciting coil of the electro-magnet to the opposite polarity by means of a change-over switch. The reed switches are lead switches for operating through magnetic action.

Embodiments of the invention will be illustrated hereinbelow in detail with reference to the accompanying drawings.

One way of carrying out the invenion is described in detail below with reference to drawing which illustrate preferred embodiments, in which:-

Figure 1 is a perspective view of one embodiment of a driving apparatus according to the invention;

Figure 2 is a side view of the driving apparatus of Fig. 1;

Figure 3 shows one embodiment of a circuit for exciting the electromagnet useful in the driving apparatus according to the invention;

Figure 4 is a schematic view showing a basic construction of another embodiment of the driving apparatus according to the invention; and

Figure 5 is a schematic view showing a basic construction of a further embodiment of the driving apparatus according to the invention.

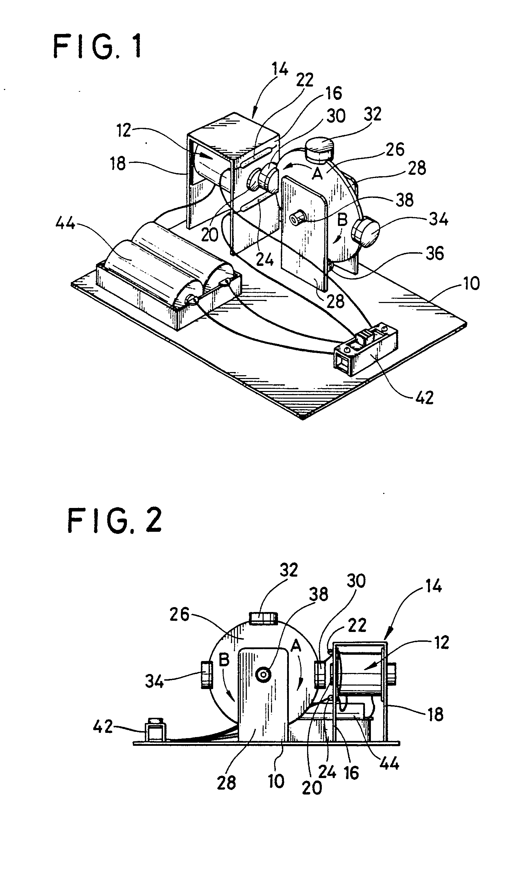

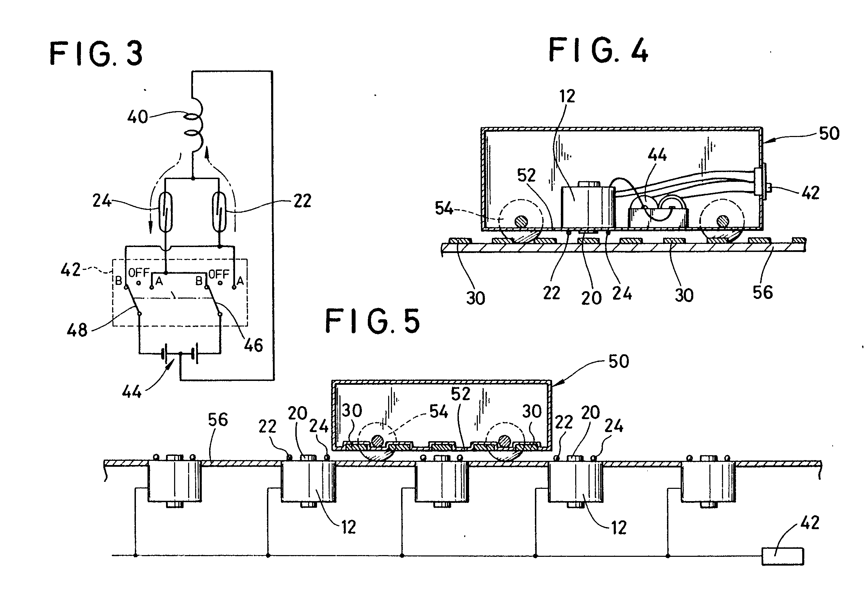

Figures 1 and 2 illustrate one embodiment of the driving apparatus according to the invention, wherein a numerical reference 10 shows a base plate, on a part of which is fixed an electromagnet 12 by means of a frame 14. In this case, the frame 14 at its opposite side walls 16, 18 is provided with holes, respectively, through which the pole 20 of the electromagnet 12, is inserted to position the same at a predetermined location on the base plate 10. Further, on the frame at its one side wall is arranged a pair of reed switches 22, 24 so as to be spaced apart at a certain gap from the pole 20 of the electromagnet 12 extending from the frame. In this case, the reed switches 22, 24 are constructed of, for example, a lead switch which operates through magnetic force.

Then, on the frame 14 at its other wall opposite to the wall 16 provided with the reed switches 22, 24 is arranged a turning disk 26, which is turnably supported on a bearing frame 28 fixed onto the base plate 10. Further, the turning disk 26 is provided on its circumference with a plurality of permanent magnets 30, 32, 34, 36 in a predetemined distance and with their same polarity being directed toward one direction. In this case, a shaft 38 for carrying the turning disk 26 on the base plate 10 is positioned within the same plane as the center of the pole 20 of the electromagnet 12, while each end face of the permanent magnets 30—36 on the turning disk 26 is in a close relation to an end face of the pole 20 of the electromagnet 12 with a predetermined gap.

When the electromagnet 12 is aligned with any one of the permanent magnets 30—36, an attractive force (namely, magnetic force) is generated between the pole 20 of the non-excited electomagnet 12 and one of the permanent magnet 30—36 in a close position thereto. The strength of the attractive force is proportional to the flux density present between the end faces of the pole 20 and the one of the permanent magnets 30—36, which flux density in turn is proportional to the overlapped area of the end faces of the pole 20 and the permanent magnet. Thus, if the overlapped area is too large, then the attractive force becomes also excessively strong when an electric source for energizing the electromagnet 12 is changed from OFF to ON, so that rotation of the turning disk 26 can not be smoothly started. In order to avoid such a situation, as illustrated in Fig. 1, each permanent magnet 30—36 is preferably positioned so that half of its end face (right or left half) is aligned with the end face of the pole 20.

Reference will now be made to a circuit for exciting the electromagnet, as shown in Fig. 3, wherein a numerical reference 40 represents an exciting coil for the electromagnet 12. The exciting coil 40 at its one end is connected to the reed switches 22, 24 in parallel, which in turn are connected through a change-over switch 42 to a DC source 44. The DC source 44 at its center is connected to the other end of the exciting coil 40.

In this case, the change-over switch 42 is consisted of a double type switch having a pair of contacting pieces 46, 48, opposite to which are provided A, OFF and B contacts, respectively. The A contact of one piece 46 and the B contact of the other piece 48 are connected to the reed switch 22, while the B contact of said one piece 46 and the A contact of said other piece 48 are connected to the reed switch 24. Then, the piece 46 is connected to the DC source at its positive side, while the other piece 48 is connected thereto at its negative side. When the pieces 46, 48 are contacted with the B contacts, as shown in Fig. 3 and one of the reed switches 22 is in its ON position, the current flowing therethrough is directed toward the exciting coil 40. When the reed switch 24 is in its ON position, the current flowing therethrough is directed toward the reed switch 24 in relation to the exciting coil 40. Thus, the exciting coil 40 may be energized to a reversible polarity depending on the switching position of the reed switches 22, 24. Similarly, when the pieces 46, 48 of the change-over switch 42 is contacted with the A contacts, the opposite situation to the above may be obtained. This operation indicates that rotation of the turning disk 26 in the reversible direction may be achieved by changing contact of the pieces 46, 48 from the B contact to the A contact. In Figs. 1 and 2, a switching mechanism and a battery are illustrated as an embodiment of the change-over switch 42 and the DC source 44.

Now, the operation of the apparatus as shown in Figs. 1 and 2 will be described, using the circuit for exciting the electromagnet illustrated hereinabove.

When the pieces 46, 48 of the change-over switch 42 in the circuit are contacted to the A contacts, one of the plurality of the permanent magnets 30—36 arranged on the turning disk 26 is in a close position to the reed switch 22 or 24 which turns to its ON position, thereby energizing the exciting coil 40 and hence the electromagnet 12. If all the permanent magnets have same S polarity in relation to the pole 20 extending from the side wall 16 of the frame 14 and the permanent magnet 30 is in a close position to the reed switch 22, then this switch 22 turns to its ON position through magnetic force of the permanent magnet 30, so that the electromagnet 12 is excited to put the polarity of the pole 20 into N. Consequently, the permanent magnet 30 in the close position to the reed switch 22 produces an attractive force in relation to the pole 20, thereby allowing the turning disk 26 to rotate in the direction A, as shown in Figs. 1 and 2. During the rotation, inertia of the turning of disk 26 is produced to continue its rotation with the permanent magnet 30 being in a close relation not to the pole 20 but to the contactless switch 24. Then, the reed switch 24 is in its ON position through the magnetic force of the permanent magnet 30 while the reed switch 22 is in its OFF position. Thus, the electromagnet 12 is excited with the pole 20 being in the S polarity and the permanent magnet 30 possesses also the S polarity at its end face, thereby producing a repulsive force for rotating the turning disk 26 in the direction A and allowing the permanent magnet 30 to pass over the reed switch 24.

In this way, the inertia of the turning disk 26 allows the permanent magnets 32, 34, 36 sequentially to approach the reed switch 22, the pole 20 and then the other reed switch 24 of the pair of switches in order and to continue its rotation for providing a rotary driving force to the shaft 38.

On the contrary, when the pieces 46, 48 of the change-over switch 42 in the circuit are contacted with the B contacts, the reverse operation may be achieved. Namely, the close position of the permanent magnets 30 to the reed switch 24 puts the latter into its ON position, thereby exciting the electromagnet 12 with the pole being in the N polarity. As a result, the attractive force is produced between the permanent magnet 30 and the pole 20, allowing the turning disk 26 to rotate in the direction B, as shown in Figs. 1 and 2. During this rotation, the inertia of the turning disk 26 allows the permanent magnet 30 to approach the one reed switch 22, thereby putting the latter into its ON position but the other reed switch 24 into its OFF position. Thus, the electromagnet 12 is energized with the pole 20 being in its S polarity and produces the repulsive force against the rotation of the permanent magnet 30 for continuing the rotation of the turning disk 26 in the direction B. In this way, the inertia of the turning disk 26 allows the permanent magnets 36, 34, 32 sequentially to approach the reed switch 24, the pole 20 and then the reed switch 22 in order and to continue its rotation.

When one desires to discontinue the rotation of the turning disk 26, the pieces 46, 48 of the change-over switch 42 (which constitutes a part of the circuit for exciting the electromagnet) may be contacted to the OFF contact for discontinuing the current from the DC source 44 to the exciting coil 40.

Figure 4 shows another embodiment of the driving apparatus according to the invention.

In this embodiment, a movable casing 50, such as a toy car, is provided at its bottom with the electromagnet 12, the pole 20 of which is extended through a hole of a base plate 52. The base plate 52 is provided at its outer bottom surface with a pair of the reed switches 22, 24 in such a way that the reed switches 22, 24 are arranged symmetrically to the pole 20 and in the moving direction of the casing 50. The movable casing 50 is provided with wheels 54, as well as the change-over switch 42 of the circuit for exciting the electromagnet 12 and the DC source 44. On the other hand, a base plate 56 forming a track for the movable casing 50 is provided with a plurality of permanent magnets 30 in a plate form spaced apart each other in a certain direction.

Also in the driving apparatus of this embodiment thus constructed, the electromagnet 12 arranged in the movable casing is controlled by the circuit for moving the movable casing forward or backward in the sequential direction of the permanent magnets 30.

Figure 5 shows a modified embodiment of the apparatus in Fig. 4, wherein the movable casing 50 is provided at its bottom plate 52 with a plurality of the permanent magnets 30 along the moving direction and moving path resp. of the casing 50 in the predetermined distance, while the base plate 56 is provided with a combination of the electromagnets 12 and the corresponding pair of reed switches 22, 24. In this case, a plurality of the combinations are preferably provided in the predetermined distance oppositely to at least one of the permanent magnets 30 aranged on the movable casing 50. Also in this embodiment, similarly to the driving apparatus of Fig. 4, the movable casing may be moved forward or backward along the sequential direction of the electromagnets under action of the electromagnets 12 and the permanent magnets 30.

As apparent from the foregoing embodiments, in the driving apparatus according to the invention, a plurality of the permanent magnets 30—36 are provided on the movable or immovable body (the rotary body 26 in Fig. 1 or the casing 50 in Fig. 5) with their same polarity being directed in one direction, while the electromagnet 12 is provided on the immovable (the frame 12 in Fig. 1 or the base plate 56 in Fig. 5) or the movable body (the casing 50 in Fig. 4) at a certain gap in relation to the permanent magnet in order to carry out either rotary or straight movement of the movable body. Especially with the driving apparatus according to the invention, a pair of the reed switches are employed as the component of the circuit for exciting the electromagnet of the main part in the driving mechanism, and the polarity may be easily reversed by the change-over switch, so that the disorder due to abrasion of electrical contact may be avoided, leading to the superior durability. Further, either rotary or straight movement may be achieved by changing the arrangement of the electromagnet and the permanent magnets, so that the driving apparatus may be applied to many type of movable toys, such as a running toy car (straight movement), a merry-go-round (rotary movement) and others. In case of use in the toy car, a direct driving system may be achieved by arranging the permanent magnets with idle wheels. In this case, the driving mechanism of the toy car may be very simple, resulting in a considerable reduction in a manufacturing cost.

Although the invention is described and illustrated with reference to the preferred embodiments, many changes and modifications may be carried out without departing from the scope of the invention as defined by the claims.

Without further elaboration, the foregoing will so fully illustrate the invention that others may, by applying the current or future knowledge, readily adapt the same for use under various conditions of service.

**Claims**

1. A driving apparatus for a movable toy, comprising a DC-source (44), a mobile body (26; 50) and an immobile body (14; 56), a plurality of permanent magnets (30, 32, 34, 36) fixed to one of said bodies in spaced apart relationship and at a predetermined distance from one another and having similar magnetic poles in a line along a moving path, the polar axes of said permanent magnets being directed perpendicularly in relation to said moving path, further comprising at least one electromagnet (12) fixed to the other one of said bodies, the electromagnet (12) having its polar axis directed perpendicularly in relation to said moving path and being spaced apart from said line of similar poles of permanent magnets (30, 32, 34, 36), further comprising reed switches (22, 24) fixed to the other one of said bodies at predetermined distances from said one pole (20) of the electromagnet (12) in a line along said moving path, said reed switches (22, 24) being spaced apart from said line of similar poles of permanent magnets (30, 32, 34, 36), so that the magnetic fields of said permanent magnets (30, 32, 34, 36) can actuate the reed switches (22, 24) when portions of the mobile body (26; 50) are moved along the moving path, and further comprising a circuit connecting the DC-source (44) with the reed switches (22, 24) and an exciting coil (40) of said electromagnet (12) the circuit exciting the electromagnet (12) so as to generate its attractive magnetic force to one of the permanent magnets (30, 32, 34, 36) when one of the reed switches (22, 24) is close to the same permanent magnet and to generate its repulsive magnetic force against the same permanent magnet when another of said reed switches (22, 24) is close to the same permanent magnet, characterized in that only two reed switches (22, 24) for each electromagnet are fixed to the other one of said bodies in positions which are symmetrical with respect to said one pole (20) of the electromagnet (12) on opposite sides thereof.

2. The apparatus according to claim 1, characterized in that said electromagnet (12) and said two reed switches (22, 24) are mounted on the immobile body (14), said mobile body (26) comprising a disc mounted for rotation adjacent said electromagnet (12), said disc being provided at its circumference with said plurality of permanent magnets (30, 32, 34, 36).

3. The apparatus according to claim 1, characterized in that said electromagnet (12) and said two reed switches (22, 24) are mounted on the bottom (52) of the mobile body (50), said plurality of permanent magnets (30) being mounted on the immobile body (56) in opposition to said pole (20) of said electromagnet (12), said permanent magnets (30) being mounted on a fixed base and spaced apart thereon in the moving direction of the mobile body (50).

4. The apparatus according to claim 1, characterized in that said plurality of permanent magnets (30) are carried by the mobile body (50) and are spaced apart in the moving direction of the mobile body (50), a plurality of said electromagnets (12) and associated pairs of reed switches (22, 24) being mounted spaced apart on said immobile body (56) in the moving direction of the mobile body (50).

5. The apparatus according to anyone of the preceding claims characterized in that the DC-source (44) alternatively connects one or the other connections of said pair of reed switches (22, 24) to the exciting coil (40) of the electromagnet (12) depending on the position of a change-over switch (42).

6. The apparatus according to anyone of the preceding claims characterized in that the mobile body (50) comprises a toy car.

7. The apparatus according to anyone of the preceding claims characterized in that the moving path and the moving direction, respectively, is a straight one.

**Patentansprüche**

1. Antriebsvorrichtung für bewegliches Spielzeug, mit einer Gleichstromversorgung (44), einem beweglichen Körper (26; 50) sowie einem ortsfesten Körper (14; 56), einer Mehrzahl Dauermagnete (30, 32, 34, 36), die an einen der Körper in vorbestimmtem Abstand voneinander befestigt sind und gleiche Magnetpole in einer Reihe entlang einer Bewegungsbahn haben, wobei die Polachsen der Dauermagnete rechtwinklig zu der Bewegungsbahn verlaufen, ferner mit wenigstens einem Elektromagnet (12), der an dem anderen der Körper befestigt ist und dessen Polachse rechtwinklig zur Bewegungsbahn verläuft und der von der Reihe gleicher Pole der Dauermagnete (30, 32, 34, 36) beabstandet ist, ferner mit Blattfeder-bzw. REED-Schaltern (22, 24), die an dem anderen der Körper in vorbestimmten Abständen von dem einen Pol (20) des Elektromagneten (12) in einer Reihe entlang der Bewegungsbahn befestigt sind, wobei die REED-Schalter (22, 24) von der Reihe gleicher Pole der Dauermagnete (30, 32, 34, 36) so beabstandet sind, daß die Magnetfelder der Dauermagnete (30, 32, 34, 36) die REED- bzw. Blattfederschalter (22, 24) aktivieren können, wenn Abschnitte des beweglichen Körpers (26; 50) entlang der Bewegungsbahn bewegt werden, und ferner mit einer Schaltung, die die Gleichstromversorgung (44) mit den Blattfederschaltern (22, 24) und einer Erregerspule (40) des Elektromagneten (12) verbindet, wobei die Schaltung den Elektromagnet (12) so erregt, daß dessen Anziehungskraft für einen der Dauermagnete (30, 32, 34, 36) erzeugt wird, wenn sich einer der Blattfederschalter (22, 24) nahe diesem Dauermagnet befindet, und dessen Abstoßungskraft gegen diesen Dauermagnet erzeugt wird, wenn sich ein anderer der Blattfederschalter (22, 24) nahe diesem Dauermagnet befindet, dadurch gekennzeichnet, daß nur zwei Blattfederschalter (22, 24) für jeden Elektromagnet an dem anderen Körper in Stellungen befestigt sind, die in bezug auf den einen Pol (20) des Elektromagneten (12) auf entgegengestzten Seiten desselben symmetrisch sind.

2. Antriebsvorrichtung nach Anspruch 1, dadurch gekennzeichnet, daß der Elektromagnet (12) und die beiden Blattfederschalter (22, 24) and dem ortsfesten Körper (14) befestigt sind, wobei der bewegliche Körper (26) eine angrenzend an den Elektromagnet (12) drehbar angeordnete Scheibe umfaßt, die auf ihrem Umfang die Mehrzahl Dauermagnete (30, 32, 34, 36) trägt.

3. Antriebsvorrichtung nach Anspruch 1, dadurch gekennzeichnet, daß der Elektromagnet (12) und die beiden Blattfederschalter (22, 24) an der Unterseite (52) des beweglichen Körpers (50) angeordnet sind, wobei die Mehrzahl Dauermagnete (30) an dem ortsfesten Körper (56) dem Pol (20) des Elektromagneten (12) gegenüberstehend angeordnet sind und die Dauermagnete (30) auf einer ortsfesten Basis angeordnet und auf dieser in Bewegungsrichtung des beweglichen Körpers (50) beabstandet sind.

4. Antriebsvorrichtung nach Anspruch 1, dadurch gekennzeichnet, daß die mehreren Dauermagnete (30) von dem fahrbaren Körper (50) getragen werden und in dessen Bewegungsrichtung beabstandet sind, wobei mehrere der Elektromagnete (12) und zugehörige Blattfederschalterpaare (22, 24) auf dem ortsfesten Körper (56) in Bewegungsrichtung des beweglichen Körpers (50) beabstandet angeordnet sind.

5. Antriebsvorrichtung nach einem der vorhergehenden Ansprüche, dadurch gekennzeichnet, daß die Gleichstromversorgung (44) in Abhängigkeit von der Stellung eines Umschalters (42) abwechselnd den einen oder den anderen Kontakt des Blattfederschalterpaars (22, 24) mit der Erregerspule (40) des Elektromagneten (12) verbindet.

6. Antriebsvorrichtung nach einem der vorhergehenden Ansprüche, dadurch gekennzeichnet, daß der bewegliche Körper ein Spielzeugauto umfaßt.

7. Antriebsvorrichtung nach einem der vorhergehenden Ansprüche, dadurch gekennzeichnet, daß die Bewegungsbahn bzw. die Bewegungsrichtung gerade verläuft.

**Revendications**

1. Appareil d'entraînement pour jouet mobile, comprenant une source (44) de courant continu, un corps mobile (25; 50) et un corps immobile (14; 56), plusieurs aimants permanents (30, 32, 34, 36) fixés sur l'un desdits corps en étant espacés les uns des autres et à une distance prédétérminée les uns des autres et comportant des pôles magnétiques similaires sur une ligne s'étendant suivant un trajet de déplacement, les axes polaires desdits aimants permanents étant dirigés perpendiculairement par rapport audit trajet de déplacement, appareil comprenant en outre au moins un électroaimant (12) fixé sur l'autre desdits corps, l'électro-aimant (12) ayant ses axes polaires dirigés perpendiculairement par rapport audit trajet de déplacement et étant espacé de ladite ligne de pôles similaires d'aimants permanents (30, 32, 34, 36), comprenant en outre des interrupteurs à lames (22, 24) fixés sur l'autre desdits corps à des distances prédéterminées dudit premier pôle (20) de l'électro-aimant (12) suivant une ligne le long dudit trajet de déplacement, lesdits interrupteurs à lames (22, 24) étant espacés de ladite ligne de pôles similaires d'aimants permanents (30, 32, 34, 36), de sorte que les champs magnétiques desdits aimants permanents (30, 32, 34, 36) peuvent actionner les interrupteurs à lames (22, 24) lorsque des parties du corps mobile (26, 50) sont déplacées le long du trajet de déplacement, et comprenant en outre, un circuit reliant la source (44) de courant continu aux interrupteurs à lames (22, 24) et un bobinage d'excitation (40) dudit électro-aimant (12), le circuit excitant l'électro-aimant (12) de façon à engendrer sa force magnétique attractive vers l'un des aimants permanents (30, 32, 34, 36) lorsque l'un des interrupteurs à lames (22, 24) est fermé sur le même aimant permanent pour engendrer sa force magnétique répulsive à l'encontre du même aimant permanent lorsqu'un autre desdits interrupteurs à lames (22, 24) est proches du même aimant permanent, caractérisé en ce que seulement deux interupteurs à lames (22, 24) pour chaque électro-aimant sont fixés sur l'autre desdits corps dans des positions qui sont symétriques par rapport audit premier pôle (20) de l'électro-aimant (12) de part et d'autre de celui-ci.

2. Appareil suivant la revendication 1, caractérisé en ce que ledit électro-aimant (12) et lesdits deux interrupteurs à lames (22, 24) sont montés sur le corps immobile (140), ledit corps mobile (26) comprenant un disque monté rotatif au voisinage dudit électro-aimant (12), ce disque étant pourvu sur sa circonférence de ladite quantité d'aimants permanents (30, 32, 34, 36).

3. Appareil suivant la revendication 1, caractérisé en ce que ledit électro-aimant (12) et lesdits deux interrupteurs à lames (22, 24) sont montés sur le fond (52) du corps mobile (50), lesdits aimants permanents (30) étant montés sur le corps immobile (56) en face dudit pôle (20) dudit électro-aimant (12), lesdits aimants permanents (30) étant montés sur une base fixée et espacés sur celle-ci dans le sens de déplacement du corps mobile (50).

4. Appareil suivant la revendication 1, caractérisé en ce que lesdits aimants permanents (30) sont portés par le corps mobile (50) et sont espacés dans le sens de déplacement du corps mobile (50), plusieurs desdits électro-aimants (12) étant associés à des paires d'interrupteurs à lames (22, 24) qui sont montés espacés sur ledit corps mobile (56) dans le sens de déplacement du corps mobile (50).

5. Appareil suivant l'une quelconque des revendications précédentes, caractérisé en ce que la source (44) de courant continu est reliée alternativement à l'une ou à l'autre des connexions de ladite paire d'interrupteurs à lames (22, 24) vers le bobinage (40) d'excitation de l'électro-aimant (12) suivant la position d'un commutateur inverseur (42).

6. Appareil suivant l'une quelconque de revendications précédentes, caractérisé en ce que le corps mobile (50) est constitué par un véhicule-jouet.

7. Appareil suivant l'une quelconque des revendications précédentes, caractérisé en ce que le trajet de déplacement et le sens de déplacement respectivement sont constitués par une ligne droite.

FIG. 1

FIG. 2

FIG. 3

FIG. 4

FIG. 5